# EUROPÄISCHE PATENTSCHRIFT

(11) **EP 3 227 641 B1**
(45) Veröffentlichungstag und Bekanntmachung des Hinweises auf die Patenterteilung: **30.01.2019**
(21) Anmeldenummer: 15757234.8
(22) Anmeldetag: 28.08.2015
(51) Int. Cl.: G01D 11/24, G12B 9/04

(54) **SENSORANORDNUNG**
SENSOR ASSEMBLY
DISPOSITIF DE DÉTECTION

(30) Priorität: 03.12.2014 EP 14196094
(43) Veröffentlichungstag der Anmeldung: 11.10.2017
(73) Patentinhaber: Grundfos Holding A/S, 8850 Bjerringbro (DK)
(72) Erfinder: JACOBSEN, Kjeld Winther, DK-8900 Randers NV (DK); JACOBSEN, John B., DK-8850 Bjerringbro (DK); HAUGAARD, Mikkel, DK-9500 Hobro (DK)
(74) Vertreter: Patentanwälte Vollmann & Hemmer
(86) Internationale Anmeldenummer: PCT/EP2015/069748
(87) Internationale Veröffentlichungsnummer: WO 2016/087063

(56) Entgegenhaltungen:
- WO-A2-2007/120898
- DE-A1-102013 200 775
- DE-C1- 19 700 965
- DE-U1-202014 103 822
- US-A1- 2013 071 290
- US-B1- 6 251 344

## Beschreibung

Die Erfindung betrifft eine Sensoranordnung mit den im Oberbegriff des Anspruchs 1 angegebenen Merkmalen.

Derartige Sensoranordnungen zählen zum Stand der Technik und weisen einen oder mehrere Sensoren auf sowie ein aus einem oder mehreren Kunststoffspritzgussteilen aufgebautes Gehäuses. Innerhalb des Gehäuses ist zumindest ein Teil der Sensorelektronik angeordnet, wobei zum Schutz der Elektronik vor eindringender Feuchtigkeit ein Absorptionsmittel innerhalb des Gehäuses vorgesehen ist, welches die in das Gehäuse eindringende Flüssigkeit aufnehmen und binden soll. Das Eindringen solcher Feuchtigkeit kann wenn überhaupt nur mit extremen technischen Aufwand verhindert werden, da die zur Herstellung des Gehäuses eingesetzten Kunststoffe typischerweise nicht diffusionsdicht sind und auch im Bereich der Dichtungen, sei es zwischen den Gehäuseteilen oder zwischen Sensor und Gehäuse oder im Bereich der Kabeldurchführung wenn auch nur in geringem Maße Feuchtigkeit durchlassen.

Eine solche Sensoranordnung ist beispielsweise aus EP 2 083 250 A1 bekannt. Es handelt sich hierbei um einen Durchflussmesser, der ein topfförmiges Gehäuse mit einem durchsichtigen Deckel und darunter angeordnetem Display mit Sensorelektronik aufweist. Der eigentliche Sensor steht bei dieser Ausführung nicht unmittelbar mit dem durch den topfförmigen Gehäuseteil verlaufenden Kanal in Verbindung, sondern ist an der Außenseite in Form eines Ultraschallwandlers angeordnet. Auch wenn der Sensor selbst hier nicht unmittelbar mit der den Kanal durchströmenden Flüssigkeit in Verbindung steht, so kann durch die Gehäusewandung selbst Feuchtigkeit diffundieren. Auch kann über die Dichtung zwischen Deckel und Gehäuse wenn auch nur in geringsten Mengen, Feuchtigkeit in dieses eindringen. Um einen solchen Feuchtigkeitseintrag möglichst gering zu halten, sind beispielsweise im Bereich des Deckels zwei unterschiedliche Kunststoffe verbaut, von denen der eine eine vergleichsweise hohe Diffusionsdichtigkeit und der andere eine hohe Festigkeit aufweist. Schließlich ist innerhalb des Gehäuses ein Trockenmittel vorgesehen, um etwaige in das Gehäuse eindringende Feuchtigkeit zu binden, um die empfindliche Sensorelektronik hiervor zu schützen. Als Trockenmittel ist hier Silikagel oder Calciumchlorid vorgesehen. Solche Trockenmittel zählen zum Stand der Technik und sind insbesondere in Verpackungen zu finden. Ein Problem dabei ist es, einerseits eine genügende Menge eines solchen Trockenmittels in dem Gehäuse vorzusehen und andererseits dafür zu sorgen, dass dieses weder mechanisch noch chemisch auf die angrenzenden Bauteile negativen Einfluss nimmt.

Dieses Problem verstärkt sich bei Sensoranordnungen mit einem vergleichsweise kleinem Gehäuse, bei dem der Sensor selbst mit der Flüssigkeit in Verbindung steht, wie dies beispielsweise bei Druck- oder Differenzdrucksensoren oder Temperatursensoren der Fall ist (EP 2 626 567 A1).

Aus DE 20 2014 103822 U1 und DE 197 00 965 C1 sind nach außen abgedichtete Sensorgehäuse bekannt, die kein Trockenmittel aufweisen, um etwaige in das Gehäuse eindringende Feuchtigkeit zu binden. Aus DE 10 2013 200775 A1 ist ein Sensorgehäuse bekannt, welches mit einer viskosen Vergussmasse gefüllt ist und bei dem ein Leiter mit einer Lippendichtung gegenüber dem Gehäuse abgedichtet ist, um ein Austreten der Vergussmasse in diesem Bereich zu verhindern.

Aus WO 2007/120898 A2, US 6,251,344 B1 und US 2013/071290 A1 sind sogenannte Getter-Systeme bekannt, mit denen das dem Sensor zugeführte Gas hinsichtlich der Feuchte und der Verunreinigungen beeinflusst werden kann. Ob und wie die im Sensorgehäuse befindliche Elektronik vor Feuchtigkeit geschützt wird, ist dort nicht angegeben.
Vor diesem Hintergrund liegt der Erfindung die Aufgabe zugrunde, eine gattungsgemäße Sensoranordnung ausgehend von EP 2 083 250 A1 dahingehend zu verbessern, dass einerseits in das Gehäuse eindringende Flüssigkeit in möglichst großer Menge gebunden werden kann, andererseits die Absorptionsmittel zum Binden der Flüssigkeit möglichst definiert innerhalb des Gehäuses angeordnet sind.

Diese Aufgabe wird gemäß der Erfindung durch eine Sensoranordnung mit den in Anspruch 1 angegebenen Merkmalen gelöst. Vorteilhafte Ausgestaltungen der Sensoranordnung sind in den Unteransprüchen, der nachfolgenden Beschreibung und der Zeichnung angegeben. Hierbei können die in den Unteransprüchen und der Beschreibung angegebenen Merkmale jeweils für sich aber auch in geeigneter Kombination die erfindungsgemäße Lösung gemäß Anspruch 1 weiter ausgestalten.

Unter Sensor im Sinne der vorliegenden Erfindung ist der Teil der Sensoranordnung zu verstehen, über welchen die zu messende Größe erfasst wird, also das eigentliche elektronische und/oder mechanische Element, dessen Veränderung erfasst wird und dessen Signal aktiv oder passiv mittels der Sensorelektronik aufbereitet wird. Ein solcher Sensor kann beispielsweise durch ein Thermoelement, durch einen Dehnungsmessstreifen oder andere bekannte Sensorelemente gebildet sein.

Die erfindungsgemäße Sensoreinordnung weist einen oder mehrere Sensoren auf, sie weist ein Gehäuse auf, welches aus einem oder mehreren Kunststoffspritzgussteilen aufgebaut ist, welches eine Sensorelektronik aufnimmt, welche das Sensorsignal verarbeitet und/oder aufbereitet. Innerhalb des Gehäuses sind Absorptionsmittel in Form eines Absorptionskörpers zur Aufnahme und zum Binden von Flüssigkeit, typischerweise von Feuchtigkeit in Form von Wasser, vorgesehen. Feuchtigkeit im Sinne der Erfindung kann jedoch auch eine andere Flüssigkeit sein, z. B. Alkohol oder Benzin, je nachdem in welcher Flüssigkeitsumgebung die Sensoranordnung befindlich ist. Es versteht sich, dass die Absorptionsmittel zur Bindung dieser Flüssigkeit entsprechend angepasst sind. Gemäß der Erfindung sind die Absorptionsmittel durch einen oder mehrere Absorptionskörper gebildet, die jeweils als Kunststoffspritzgussteil ausgebildet sind.

Grundgedanke der vorliegenden Erfindung ist es, zur Aufnahme der innerhalb des Sensorgehäuses befindlichen Feuchtigkeit eine Absorptionskörper vorzusehen, der als Kunststoffspritzgussteil ausgebildet ist und der damit zum einen kostengünstig in Großserienfertigung herstellbar ist und zum anderen in seiner Form möglichst optimal an den innerhalb des Sensorgehäuses gebildeten Freiraum angepasst sein kann. Dadurch, dass der Absorptionskörper eine bleibende plastische Form aufweist, kann dieser so ausgebildet werden, dass er den verbleibenden Freiraum möglichst vollständig einnimmt, andererseits jedoch einen ausreichenden Abstand zu der im Gehäuse befindlichen Sensorelektronik bzw. deren elektronischen Bauteilen aufweist. Der erfindungsgemäße Absorptionskörper kann darüber hinaus weitere Aufgaben erfüllen, beispielsweise die Montage der Bauteile vereinfachen, indem er während der Montage quasi als Halter fungiert.

Vorteilhaft ist das Gehäuse der Sensoranordnung aus mindestens zwei Gehäuseteilen aufgebaut, die als Kunststoffspritzgussteile ausgebildet sind, wobei der Absorptionskörper vorteilhaft mit einem der Gehäuseteile im Mehrkomponentenspritzgießverfahren hergestellt ist. Diese Ausbildung hat den Vorteil, dass der Absorptionskörper einstückig mit einem Gehäuseteil ausgebildet ist und damit bei der Montage nicht gesondert gehandhabt werden muss.

Besonders vorteilhaft ist es, die beiden Gehäuseteile mittels eines O-Rings zueinander abzudichten. Solche O-Ringe sind Standardbauteile, die kostengünstig verfügbar sind und eine hohe Dichtheit gewährleisten. Wenn das Gehäuse aus mehr als zwei Gehäuseteilen aufgebaut ist, ist es vorteilhaft, alle Gehäuseteile zueinander jeweils über O-Ringe abzurichten.

Eine besonders vorteilhafte Sensoranordnung ergibt sich, wenn das Gehäuse einen zumindest abschnittsweise rohrförmigen Gehäuseteil aufweist und einen diesen an einem Ende abschließenden Deckel. Dieser Deckel ist dann vorteilhaft unter Eingliederung eines O-Rings mit dem anderen Gehäuseteil verbunden. Dabei ist der rohrförmige Abschnitt im Bereich, in dem die Dichtung eingegliedert ist, vorteilhaft kreisrund, jedoch nicht notwendigerweise. Der O-Ring kann auch einer ovalen oder anderen Gehäusekontur folgen, die beispielsweise im Hinblick auf die Einbausituation der Sensoranordnung in einer Vorrichtung vorgegeben oder vorteilhaft sein kann.

Wenn durch das Gehäuse ein elektrischer Leiter durchzuführen ist, was bei kabelgebundenen Sensoranordnungen der Fall ist, dann ist mindestens ein elektrischer Leiter dichtend durch ein Gehäuseteil durchgeführt, wobei die Durchführung vorzugsweise durch den Deckel erfolgt, wobei gemäß einer vorteilhaften Weiterbildung der Erfindung die Abdichtung zwischen Gehäuseteil und Leiter durch einen O-Ring gebildet ist. Auch in diesem Bereich ist der Einsatz von O-Ringen besonders vorteilhaft, da sie einerseits kostengünstig in der Herstellung, einfach in der Montage und hochwirksam in der Dichtwirkung sind.

Dabei hat es sich als besonders vorteilhaft bewiesen, die Leiterdurchführung im Gehäuseteil durch eine Ausnehmung zu bilden, die einen nach außen konisch zulaufenden Abschnitt aufweist, in dem der O-Ring zur Anlage kommt, welcher auf dem die Ausnehmung durchsetzenden Leiter angeordnet ist. Dabei weist der Leiter vorzugsweise eine umlaufende Nut auf, um den O-Ring in seiner bestimmungsgemäßen Position zu halten und eine einfache Montage zu gewährleisten, indem der O-Ring zunächst auf den Leiter im Bereich der Nut aufgesetzt wird und nachfolgend der Leiter mit dem darauf befindlichen O-Ring in die Ausnehmung eingegliedert wird. Durch die Konizität der Ausnehmung ist eine Führung des Leiters bei der Montage gewährleistet, sodass die Bauteile quasi selbsttätig beim Einsetzen in die bestimmungsgemäße Position gelangen.

Die Abdichtung des Leiters gegenüber dem Gehäuseteil erfolgt vorteilhaft durch einen O-Ring. Um eine zuverlässige elektrische Anbindung zu gewährleisten ist der Leiter gemäß einer vorteilhaften Weiterbildung der Erfindung an seiner gehäusefernen Seite elektrisch leitend mit einer Leitung verbunden, wobei diese Leitungsverbindung vorteilhaft mit einem elektrisch isolierenden Schrumpfschlauch überzogen ist und dann mit Kunststoff umspritzt ist. Wenn hier, was meist der Fall ist, mehrere Leiter angeordnet sind, so versteht es sich, dass diese jeweils nach Fertigstellung der elektrischen Verbindung je mit einem Schrumpfschlauch überzogen werden und dann gemeinsam mit Kunststoff umspritzt werden. Die elektrische Verbindung erfolgt vorteilhaft durch Löten, kann jedoch auch durch Schweißen oder durch eine Klemmverbindung erfolgen. Dabei ist es vorteilhaft so, dass zunächst die Leiter mit den darauf angebrachten O-Ringen in den entsprechenden Ausnehmungen im Deckel bzw. gegebenenfalls in einem anderen Gehäuseteil angeordnet werden, wonach die elektrischen Verbindungen hergestellt, die Schrumpfschläuche angebracht und schließlich der so gebildete Leitungsanschluss mit Kunststoff umspritzt wird, um so mit dem Deckel bzw. dem entsprechenden Gehäuseteil fest und unlösbar verbunden zu werden.

Sowohl montagetechnisch als auch aus Gründen der Stabilität und der Dichtheit ist es vorteilhaft, wenn der Deckel stopfenförmig ausgebildet ist und einen die Stirnseite des rohrförmigen Gehäuseteils übergreifenden Deckelteil aufweist, der mit diesem Gehäuseteil abschließt und einen abgesetzten stopfenförmigen Deckelteil aufweist, der in den rohrförmigen Gehäuseteil eingreift. Zur Abdichtung der beiden Gehäuseteile ist ein O-Ring zwischen dem abgesetzten Deckelteil und der Innenseite des rohrförmigen Gehäuseteils angeordnet.

Gemäß einer vorteilhaften Weiterbildung der Erfindung ist das deckelferne Ende des rohrförmigen Gehäuseteils zu einer Spitze ausgeformt, in welcher der Sensor angeordnet ist. Bei einer solchen Anordnung ist also an einem Ende des rohrförmigen Gehäuseteils der Sensor in der Spitze angeordnet und zum anderen Ende der Deckel, welcher die elektrischen Leitungsdurchführungen aufweist.

Die Sensorelektronik ist vorteilhaft zumindest teilweise auf einer Leiterplatte angeordnet, die den rohrförmigen Gehäuseteil längs durchsetzt und an einem Ende den Sensor oder die Sensoren trägt und am anderen Ende mit den durch den Gehäusedeckel geführten Leitern verbunden ist und die entsprechenden Leitungskontakte trägt.

Um den innerhalb des Sensorgehäuses gebildeten Raum möglichst weitgehend durch den Absorptionskörper zu nutzen ist gemäß einer Weiterbildung der Erfindung der Absorptionskörper der Innenkontur des Gehäuses angepasst und mittels Abstandshaltern mit Abstand zur Gehäusewand angeordnet. Diese Abstandshalter verhindern zum einen, dass der Absorptionskörper an der Gehäusewand anliegt, sodass um den Absorptionskörper herum eine gewisse Zirkulation und damit auch Verteilung der Feuchtigkeit möglich ist. Andererseits sind die Abstandshalter wichtig, damit zwischen dem Absorptionskörper und der Gehäusewand ein gewisser Freiraum verbleibt, den der Absorptionskörper benötigt, um sich bei Feuchtigkeitsaufnahme entsprechend ausdehnen zu können.

Die Abstandshalter sind vorteilhaft Teil des Absorptionskörpers und vorzugsweise durch aus dem Absorptionskörper seitlich auskragende Federzungen ausgebildet, die sich in Einbaulage an der Gehäusewand abstützen und somit den Absorptionskörper mit Abstand zur Gehäusewandung innerhalb des Gehäuses halten.

Vorteilhaft weist der Absorptionskörper eine mittige und im Querschnitt im Wesentlichen rechteckige Ausnehmung auf, die zur Aufnahme der Leiterplatte vorgesehen ist. Dabei ist die Ausnehmung so ausgestaltet, dass die Leiterplatte den Absorptionskörper längs durchsetzt, aber von diesem beabstandet ist.

Um eine eindeutige Lagezuordnung zwischen dem rohrförmigen Teil des Gehäuses und dem Absorptionskörper zu gewährleisten, sind vorteilhaft Formschlussmittel zwischen diesen Bauteilen vorgesehen, welche deren Anordnung zueinander eindeutig bestimmen. Weiter oder alternativ sind Formschlussmittel zwischen dem Gehäusedeckel und dem Absorptionskörper vorgesehen, welche deren Anordnung zueinander eindeutig bestimmen. Eine solche Ausgestaltung ermöglicht nur eine Montage der Bauteile zueinander in der gewünschten vorbestimmten Lage, Fehlmontagen werden dadurch zuverlässig ausgeschlossen.

Auch kann der Absorptionskörper vorteilhaft den Raum zur Aufnahme des O-Rings zwischen dem rohrförmigen Gehäuseteil und dem Deckel einseitig begrenzen, sodass an den Gehäusebauteilen praktisch keine besonderen Ausgestaltungen zur Aufnahme des O-Rings erforderlich sind, wie insbesondere die weiter unten im Einzelnen beschriebene Konstruktion zeigt.

Um Absorptionskörper und Leiterplatte miteinander zu verbinden, ist vorteilhaft in der zentralen Ausnehmung des Absorptionskörpers eine vorspringe Federzunge vorgesehen, welche in eine Ausnehmung oder in einen Vorsprung an der Leiterplatte eingreift und die Leiterplatte innerhalb des Absorptionskörpers festhält. Diese Anordnung ist insbesondere unter Gesichtspunkten einer vereinfachten Montage vorteilhaft, da zunächst die Leiterplatte im Absorptionskörper angeordnet werden kann und dann diese über die Federzunge vereinten Teile als quasi ein Teil in das Sensorgehäuse eingefügt werde kann.

Wenn der Sensor in quasi direktem Kontakt mit dem Fluid stehen soll, dann ist es vorteilhaft, wenn das Gehäuse im Bereich des Sensors eine Öffnung aufweist und der Sensor mittels eines O-Rings im Bereich der Öffnung gegenüber dem Gehäuse abgedichtet ist. Auch in diesem Bereich bildet der O-Ring eine einfache, gut zu montierende und kostengünstige und langzeitstabile Dichtung.

Wenn der Sensor, wie es beispielsweise beim Einsatz in Umwälzpumpen, insbesondere Heizungsumwälzpumpen, aber auch in anderen Bereichen als Differenzdrucksensor ausgebildet sein soll, dann sind im Gehäuse im Bereich des Sensors zwei Öffnungen an gegenüberliegenden Seiten des Sensors vorgesehen, wobei vorteilhaft jede dieser Öffnungen mittels eines O-Rings gegenüber dem Sensor abgedichtet ist.

Besonders vorteilhaft ist es, wenn alle Dichtungen des Sensorgehäuses durch O-Ringe gebildet sind, da dann keine Spezialdichtungen erforderlich sind und kostengünstige und einfach zu montierende Dichtungselemente Verwendung finden können. Derartige O-Ringe können gleichermaßen gut als Radial- und/oder Axialdichtung Verwendung finden, ohne dass eine Anpassung der Dichtung selbst erforderlich ist. Lediglich der Dichtsitz ist entsprechend auszulegen. O-Ringe sind kostengünstig in der Herstellung und weisen insbesondere bei der hier relevanten statischen Belastung eine sehr hohe Dichtigkeit auf.

Unter Absorptionskörper im Sinne der Erfindung ist ein Körper zu verstehen, der Wasser und/oder Feuchtigkeit dauerhaft binden kann. Dabei sollte gemäß der Erfindung ein Absorptionskörper verwendet werden, dessen Kunststoff mindestens 0,5 Masseprozent Wasser und/oder mindestens 0,2 Masseprozent Feuchtigkeit, vorzugsweise mehr als 5 Masseprozent Wasser und/oder mehr als 2 Masseprozent Feuchtigkeit aufnehmen kann. Je höher die Aufnahmefähigkeit für Flüssigkeit und/oder Feuchtigkeit ist, desto günstiger ist es, wesentlich ist allerdings, dass das Wasser bzw. die Feuchtigkeit im Absorptionskörper gebunden bleiben. Es sind eine Vielzahl von Kunststoffen bekannt, die hierfür prädestiniert sind. So können hier vorteilhaft Polyoxymethylen, Polyethersulfon, Acrylnitril-Butadien-Styrol oder vorzugsweise Polyamid eingesetzt werden. Als geeignet hierfür hat sich z. B. ein unter der Marke Ultramid ® A3W spezifizierter Kunststoff der BASF Aktiengesellschaft, Deutschland erwiesen, es handelt sich hierbei um ein Polyamid. Dieser Kunststoff kann 8 bis 9 Masseprozent an Wasser aufnehmen (bei 23 °C) bzw. 2,5 bis 3,1 Masseprozent an Feuchtigkeit (bei 23 °C und 50 % relativer Luftfeuchte). Als Polyoxymethylen wird hier beispielhaft Hostaform ® C9021 der Ticona GmbH Deutschland aufgeführt. Als Polyethersulfon wird beispielhaft der von der BASF Aktiengesellschaft, Deutschland unter der Marke Ultrason ® E 2010 G6 SW 15038 angebotene Kunststoff angegeben. Als ABS-Kunststoff wird beispielhaft ein von der saudi-arabischen Firma Sabic unter der Marke Cycolac® Resin S702S angebotener Kunststoff genannt. Die vorgenannten Kunststoffe sind sämtlich zum Spritzgießen geeignet und weisen die erforderlichen wasser- bzw. feuchtigkeitsbindenden Eigenschaften auf.

Die Erfindung ist nachfolgend anhand eines in der Zeichnung dargestellten Ausführungsbeispiels näher erläutert.

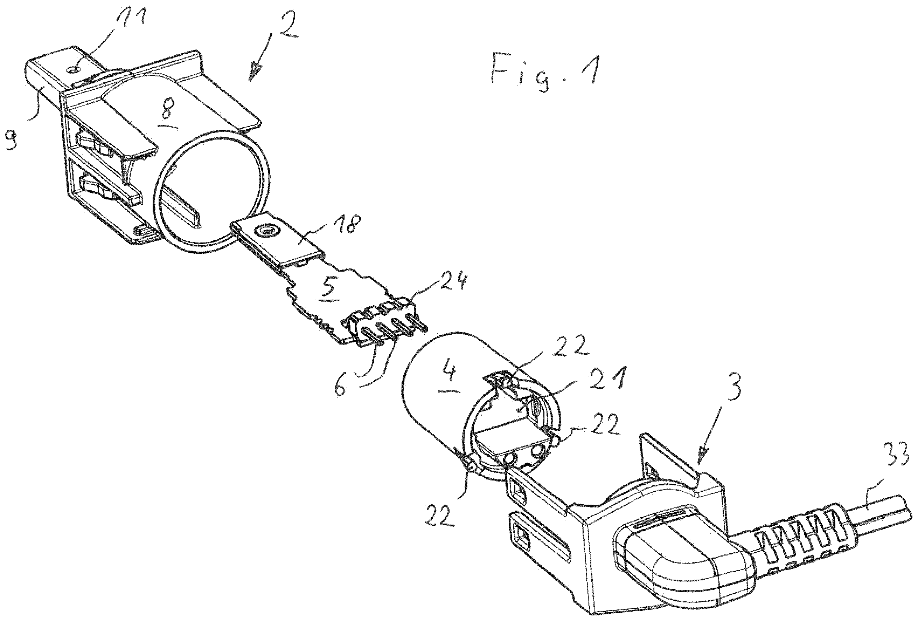

- Fig. 1: in stark vereinfachter Explosionsdarstellung eine Sensoranordnung gemäß der Erfindung,
- Fig. 2: die Sensoranordnung gemäß Fig. 1 nach einem erste Montageschritt,
- Fig. 3: die Sensoranordnung gemäß Fig. 1 nach einem zweiten Montageschritt,
- Fig. 4: eine Ansicht der Bauteile der Sensoranordnung nach Fig. 1,
- Fig. 5: einen Längsschnitt durch die Bauteile nach Fig. 4,
- Fig. 6: einen Längsschnitt durch die montierte Sensoranordnung,
- Fig. 7: in vergrößerter Darstellung die Einzelheit VII aus Fig. 6 und
- Fig. 8: in vergrößerter Darstellung die Einzelheit VIII aus Fig. 6.

Die anhand der Figuren darstellte Sensoranordnung weist ein Gehäuse 1 auf, welches aus einem rohrförmigen Gehäuseteil 2 und einem Deckel 3 gebildet ist. In diesem Gehäuse 1 sind ein Absorptionskörper 4 sowie eine Platine 5 angeordnet. Die Platine 5 trägt die Sensorelektronik und ist an einem Ende mit elektrischen Kontakten 6 zum elektrischen Anschluss und am anderen Ende mit dem eigentlichen Sensor 7 versehen, bei dem es sich um einen Differenzdrucksensor handelt. Die Gehäuse 2 und 3 sind als Kunststoffspritzgussteile ausgebildet, ebenso der Absorptionskörper 4, welcher zur Aufnahme von Flüssigkeit, hier Wasser, vorgesehen ist. Der Absorptionskörper 4 bindet das innerhalb des Gehäuses 1 befindliche Wasser bzw. die Feuchtigkeit, um so die auf der Platine 5 angeordneten Elektronikbauteile vor Feuchtigkeit zu schützen.

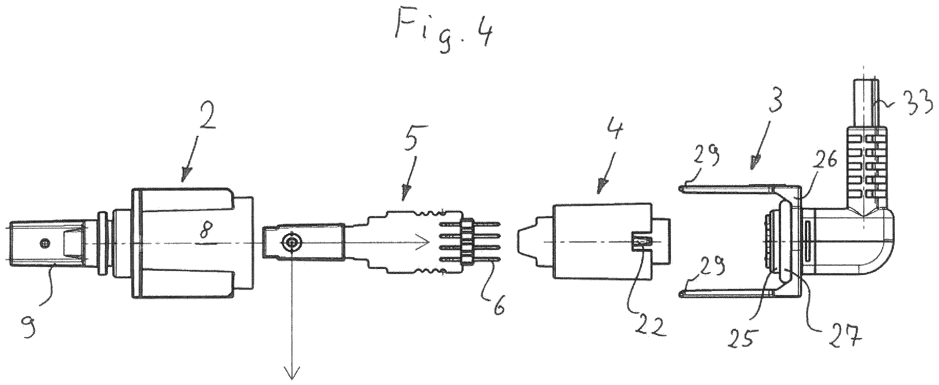

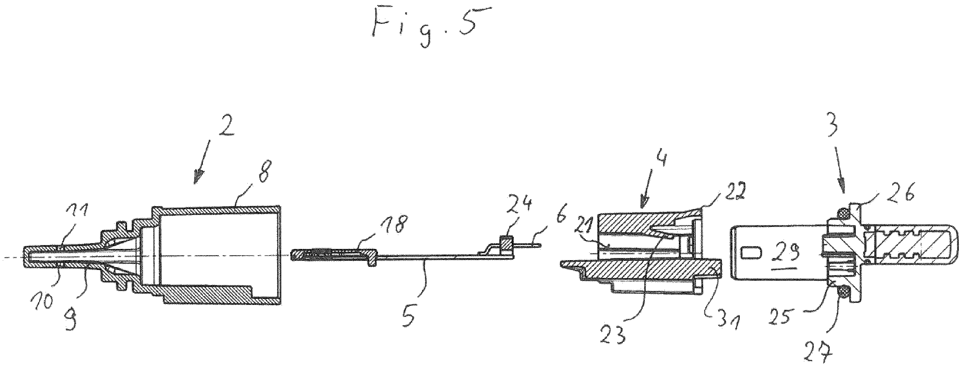

Das Gehäuseteil 2 weist einen rohrförmigen Abschnitt 8 auf, der im Wesentlichen eine hohlzylindrische Form hat und an einem axialen Ende (in den Figuren 4, 5 und 6 am rechten Ende) zur Aufnahme des Deckels 3 ausgebildet ist und am anderen axialen Ende zu einer Spitze 9 ausgebildet ist, die ebenfalls als Hohlkörper ausgebildet ist und an zwei um 180° voneinander abgewandten Flachseiten jeweils mit einer Ausnehmung 10 bzw. 11 versehen ist. Hier sitzt der Sensor 7, der als Differenzdrucksensor von zwei Seiten beaufschlagbar und mit dem jeweiligen Fluid verbunden ist, dessen Druck zu erfassen ist.

Die dargestellte Sensoranordnung ist zur Eingliederung in eine entsprechende Ausnehmung in einem Pumpengehäuse vorgesehen, wie es zum Beispiel aus EP 2 626 567 A1 zum Stand der Technik zählt. Die Spitze 9 sitzt innerhalb einer weichelastischen Dichtmanschette 12, welche die Spitze umgibt und fluchtend zu den Ausnehmungen 10 und 11 Ausnehmungen 13 und 14 aufweist, die zu entsprechenden Kanälen im Pumpengehäuse führen. Zur Abdichtung ist die Manschette zu einem Dichtring 15 ausgeformt, welcher axial an die Dichtmanschette 12 anschließt und auf einem Absatz 16 des rohrförmigen Gehäuseteils 2 zwischen dem rohrförmigen Abschnitt 8 und der Spitze 9 angeordnet ist.

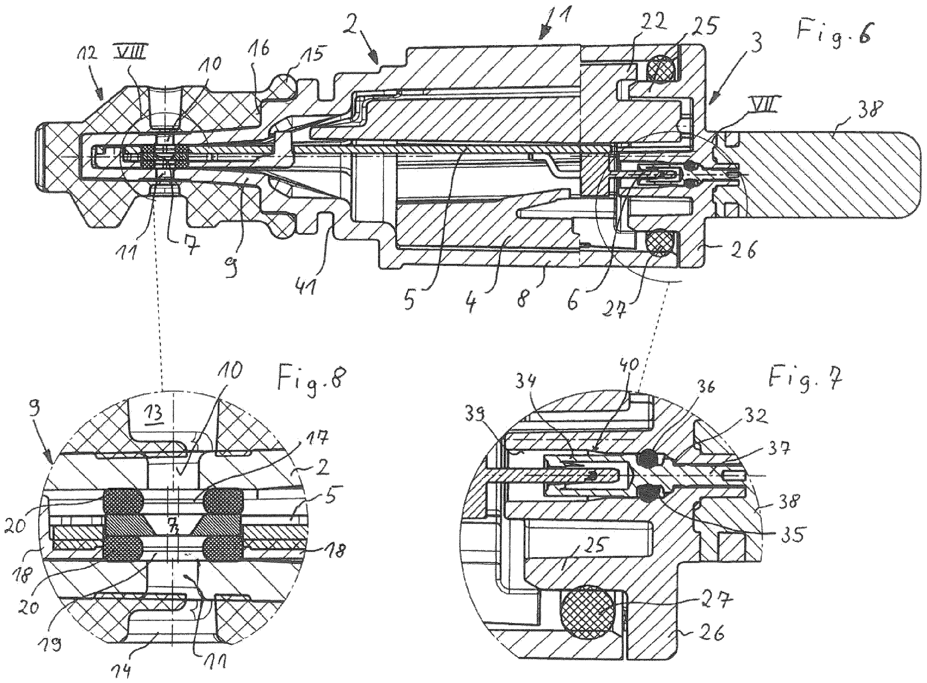

Damit der Sensor 7, der im Bereich einer Ausnehmung 17 in der Platine angeordnet ist, in der in Fig. 8 dargestellten bestimmungsgemäßen Position innerhalb der Gehäusespitze 9 angeordnet ist, ist ein Distanzkörper 18 vorgesehen, der aus weichelastischem Material besteht, die Platine 5 an ihrem spitzenseitigen Ende überragt und den Freiraum zwischen dem spitzenseitigen Ende der Platine 5 und dem Hohlraum innerhalb der Gehäusespitze 9 ausfüllt und damit die axiale Position der Platine 5 festlegt. Dieser Distanzkörper 18 ist innerhalb des Gehäuseteils 2 etwa in dem Bereich, in welchem der Dichtring 15 außen zur Anlage kommt, innen abgestützt und weist fluchtend zum Sensor 7 und der Ausnehmung 11 eine Ausnehmung 19 auf, die ebenso wie die Ausnehmung 17 in der Platine umfänglich einen O-Ring 20 abstützt, der an einer Seite durch den Sensor 7 und an der anderen Seite durch eine Wand des Gehäuseteils 2 abgestützt ist. Diese O-Ringe 20, die den Sensor von beiden Seiten umgeben, dichten diesen gegenüber dem Gehäuseteil 2 ab, sodass die über die Ausnehmungen 10 und 11 in der Gehäusespitze 9 zugeführte Flüssigkeit zwar den Sensor 7 erreicht, jedoch nicht in das Gehäuses 1 gelangen kann.

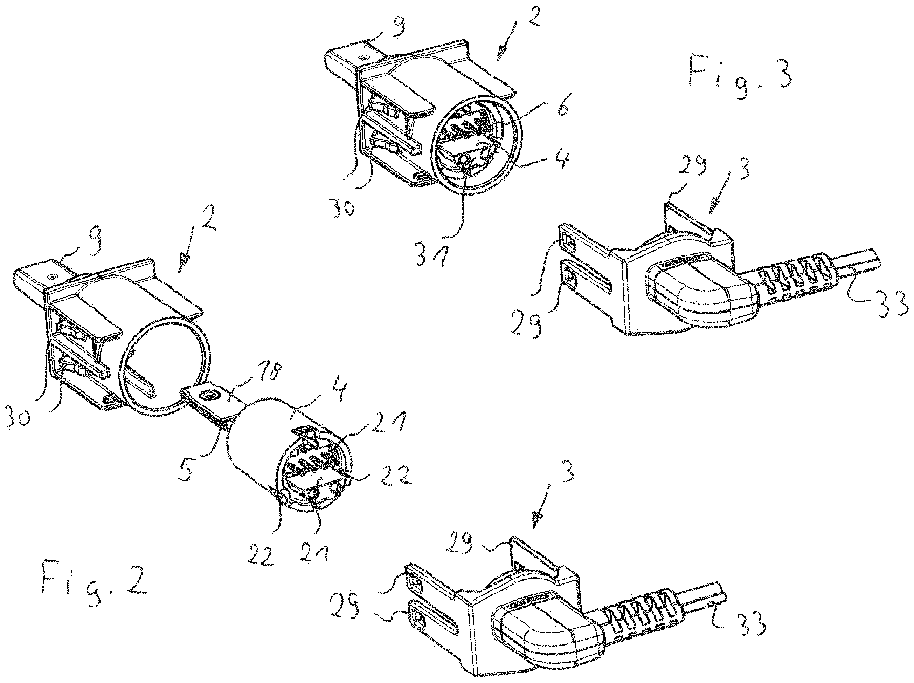

Im Bereich des rohrförmigen Abschnitts 8 ist die Platine 5 in einer den im Wesentlichen zylinderförmigen Absorptionskörper 4 durchsetzenden Ausnehmung 21 aufgenommen. Der Absorptionskörper 4 ist der Innenkontur des rohrförmigen Gehäuseteils 2 in diesem Bereich im Wesentlichen angepasst. Er weist drei über den Umfang gleichmäßig verteilte Vorsprünge 22 in Form von Zungen als Abstandshalter auf, welche schräg nach hinten, also in Richtung des anschlussseitigen Endes sowie radial nach außen vorspringen und dafür sorgen, dass der Absorptionskörper 4 mit radialem Abstand innerhalb des rohrförmigen Gehäuseteils 2 anliegt. An der nicht bestückten Seite der Platine 5, die in Fig. 6 oben liegt, liegt die Platine 5 mit geringem Abstand innerhalb der Ausnehmung 21 und auf der anderen Seite mit deutlich größerem Abstand, um einen Freiraum für die auf der Platine 5 befindlichen elektronischen Bauteile zu bilden. Innerhalb der Ausnehmung 21 ist im Absorptionskörper 4 eine schräg nach innen und zum anschlussseitigen Ende ragende Federzunge 23 ausgebildet, welche dafür sorgt, dass nach dem Verbinden von Absorptionskörper 4 und Platine 5, wie dies in Fig. 2 dargestellt ist, diese Bauteile miteinander verbunden bleiben, also bei der Montage quasi wie ein Bauteil gehandhabt werden können. Die Federzunge 23 hintergreift hierzu einen Vorsprung 24 auf der Platine 5, der hier zum Herausführen der elektrischen Kontakte dient.

Der Deckel 3 ist stopfenförmig ausgebildet und weist einen ringförmigen Abschnitt 25 auf, der nach innen in den rohrförmigen Abschnitt 8 des Gehäuseteils 2 ragt und von diesem mit Abstand umgeben ist (in montiertem Zustand siehe Fig. 6). Dieser ringförmige Abschnitt 25 wird durch einen Flansch 26 radial überragt, welcher den rohrförmigen Abschnitt 8 stirnseitig abschließt und an diesem anliegt. Die Innenseite dieses Flansches 26 sowie die Außenseite des ringförmigen Abschnitts 25 bilden den deckelseitigen Teil eines Sitzes für einen O-Ring 27, der radial nach außen durch den rohrförmigen Abschnitt des Gehäuseteils 2 und axial durch die Vorsprünge 22 des Absorptionskörpers 4 begrenzt ist. Der O-Ring 27 dichtet die Gehäuseteile 2 und 3 zueinander ab. Die Bauteile sind durch seitliche an den Flansch 26 anschließende und in Richtung des Gehäuseteils 2 verlaufende Rastzungen 29 verbunden, welche beim Zusammenschieben der Gehäuseteile 2 und 3 hinter Vorsprüngen 30 an der Außenseite des Gehäuseteils 2 verrasten und somit die Bauteile fest miteinander verbinden. Die Gehäuseteils 2 und 3 können also durch einfaches Zusammenstecken dauerhaft miteinander verbunden werden, wie dies insbesondere aus Fig. 3 ersichtlich ist.

Um sicherzustellen, dass der Absorptionskörper 4 nur in seiner vorbestimmten Stellung in den Deckel 3 eingliederbar ist, weist der Absorptionskörper 4 an seinem zum Deckel gerichteten Ende neben den Kontakten 6 einen Vorsprung 31 auf, der, wenn die Platine 5 in die Ausnehmung 21 im Absorptionskörper 4 eingegliedert ist, in einem entsprechend ausgebildeten Sackloch an der Innenseite des Deckels 3 aufgenommen ist. Da der Vorsprung 31 im Absorptionskörper 4 sowie die entsprechende sacklochförmige Ausnehmung im Deckel 3 bezogen auf die Längsmittelachse asymmetrisch angeordnet und ausgebildet sind, ist ein Zusammenfügen dieser Bauteile nur in der bestimmungsgemäßen Position möglich.

Die Sensoranordnung ist in der dargestellten Ausführung kabelgebunden, d. h. die Kontakte 6 sind über elektrische Leiter 32, welche durch den Deckel 3 hindurch geführt sind, mit Leitern eines Kabels 23 verbunden, über welches die Sensoranordnung signalverbunden und elektrisch verbunden wird.

Alternativ kann eine kabellose elektrische Versorgung, beispielsweise induktiv vorgesehen sein. Die Signalverbindung kann dann über Funk (WLAN, Bluetooth oder dergleichen) erfolgen. Die elektrischen Leiter 32 sind aus Metall und weisen jeweils einen muffenartigen in das Gehäuseinnere weisenden Teil 34 auf, der zur Aufnahme eines Kontaktes 6 und zur elektrischen Verbindung mit diesem vorgesehen ist. Der muffenartige Teil 34 jedes Leiters 32 ist außenseitig zylindrisch ausgebildet und mit einer umlaufenden Nut 35 versehen, welche zur Aufnahme eines O-Rings 36 vorgesehen ist. Jenseits der Nut 35 und im Bereich der Nut 35 ist der Leiter massiv und im Querschnitt kreisrund ausgebildet und stiftartig fortgesetzt. Dieser stiftartige Teil 37 durchsetzt den Deckel 3 und ist an der Außenseite fortgesetzt, wo der entsprechende Leiter des Kabels 33 mit diesem Teil 37 durch Löten verbunden ist. Jenseits des Deckels 3 ist der Teil 37 des elektrischen Leiters 32 sowie der angelötete Leiter des Kabels 33 durch einen Schrumpfschlauch nach außen hin elektrisch isoliert. Sämtliche Leiter sind dann kunststoffumspritzt, derart, dass dieser eine Zugentlastung 38 für das Kabel 33 bildende Kunststoffteil formschlüssig am Deckel 3 unter Einschluss sämtlicher Leiter angespritzt ist.

Zur Aufnahme der elektrischen Leiter 32 sind innerhalb des Deckels 3 parallel zur Längsachse zylindrisch abgestufte Ausnehmungen 39 vorgesehen, die einen nach außen hin konisch zulaufenden Abschnitt 40 aufweisen und welche jeweils einen elektrischen Leiter 32 unter Eingliederung des in der Nut 35 liegenden O-Rings 36 dichtend aufnehmen. Der elektrische Leiter 32 wird von der Deckelinnenseite in die Ausnehmung 39 eingesetzt, wobei der konisch zulaufende Abschnitt dazu dient, den Leiter 32 mit dem O-Ring 36 in die bestimmungsgemäße Position zu führen, in welcher der Leiter 32 axial nach außen durch die abgestufte Ausnehmung formschlüssig gehalten ist und der O-Ring 36 dichtend zwischen der Ausnehmung 39 und dem Leiter 32 anliegt.

Das den Deckel 3 bildende Kunststoffspritzgussteil wird von der zum Gehäuseinneren gewandten Seite in den Ausnehmungen 39 mit den Leitern 32 bestückt, indem diese mit O-Ring 36 versehene Leiter 32 in die entsprechenden Ausnehmungen 39 soweit axial eingesteckt werden, bis sie an der entsprechenden Abstufung innerhalb der Ausnehmung 39 anliegen. Sodann werden die Leiter des Kabels 33 angelötet, die Schrumpfschläuche, die zuvor über die Leitungsenden gezogen worden sind, durch Wärmeeinwirkung aufgeschrumpft, wonach die Zugentlastung 38 umspritzt wird und somit der Deckel 3 fest und unlösbar mit dem Kabel 33 verbunden wird und die elektrischen Verbindungen zum Kabel aufweist. Sodann wird die Platine 5, welche mit dem Distanzkörper 18 versehen ist und mit den O-Ringen 20 bestückt ist, in die Ausnehmung 21 des Absorptionskörpers 3 eingeschoben, und zwar mit den Kontakten 6 vorweg, bis die Federzunge 23 hinter dem Vorsprung 24 rückfedert und damit die Platine 5 und Absorptionskörper 4 miteinander verbindet.

Diese verbundenen Bauteile, wie sie in Fig. 2 dargestellt sind, werden dann in den Gehäuseteil 2 eingeschoben bis das Ende des Distanzkörpers 8 und somit auch das Ende des Platine 5 innerhalb der Spitze 9 des Gehäuseteils 2 in ihrer bestimmungsgemäßen Position befindlich sind, in welcher die O-Ringe 20 den Sensor 7 gegenüber Gehäuseteil 2 abdichten und über die Ausnehmungen 10 und 11 jeweils druckbeaufschlagt sind (Fig. 3).

Es sind nun noch die Gehäuseteile 3 und 4 durch Zusammenstecken miteinander zu verbinden, wobei durch den Vorsprung 31 sichergestellt ist, dass die Verbindung so erfolgt, dass die Kontakte 6 in den dafür vorgesehenen muffenartigen Teilen der elektrischen Leiter 32 zum Eingriff kommen und der Deckel 6 unter Eingliederung des O-Rings 27 mit dem Gehäuseteil 2 fest und dicht verbunden wird. Gesichert wird die Verbindung durch die Rastzungen 29, die dann hinter die Vorsprünge 30 am Gehäuseteil 2 greifen und so die Sensoranordnung in der bestimmungsgemäßen Zusammenbauposition halten, damit das Gehäuse 1 mit der darin befindlichen Platine 5 nach außen hin abgedichtet ist. Dabei ist der Absorptionskörper 4 mit Abstand zur Platine 5 und zur Gehäusewandung angeordnet ist, sodass dieser sich bei Aufnahme von Flüssigkeit, die durch das Gehäuse diffundiert oder in andere Weise in dieses gelangen kann, ausdehnen und damit auch Feuchtigkeit aufnehmen kann.

Sämtliche Abdichtungen der erfindungsgemäßen Sensoranordnung sind durch O-Ringe gebildet, was besonders vorteilhaft ist, da diese kostengünstig in der Herstellung, einfach in der Montage sind und eine hohe statische Dichtwirkung auch über lange Zeit aufweisen. Darüber hinaus erlaubt die O-Ringanordnung einen einfachen Austausch der Dichtungen. Die so gebildete Sensoranordnung wird dann unter Eingliederung der Dichtmanschette 12 in die dafür vorgesehene Ausnehmung im Pumpengehäuse gesteckt und über eine umlaufende Nut 41 an der Außenseite des Gehäuseteils 2 in dieser Stellung mittels eines entsprechenden Bügels gesichert.

### Bezugszeichenliste

- 1: Gehäuse
- 2: rohrförmiges Gehäuseteil
- 3: Deckel
- 4: Absorptionskörper
- 5: Platine, Leiterplatte
- 6: elektrische Kontakte
- 7: Sensor
- 8: rohrförmiger Abschnitt von 2
- 9: Spitze von 2
- 10: Ausnehmung in 9
- 11: Ausnehmung in 9
- 12: Dichtmanschette
- 13: Ausnehmung fluchtend zu 10
- 14: Ausnehmung fluchtend zu 11
- 15: Dichtring
- 16: Absatz
- 17: Ausnehmung
- 18: Distanzkörper
- 19: Ausnehmung
- 20: O-Ring
- 21: Ausnehmung im Absorptionskörper
- 22: Vorsprünge
- 23: Federzunge
- 24: Vorsprung
- 25: ringförmiger Abschnitt
- 26: Flansch
- 27: O-Ring
- 29: Rastzungen
- 30: Vorsprünge
- 31: Vorsprung
- 32: elektrische Leiter
- 33: Kabel
- 34: muffenartiger Teil von 32
- 35: Nut an 32
- 36: O-Ring
- 37: stiftartiger Teil
- 38: Zugentlastung
- 39: zylindrisch abgestufte Ausnehmung in 3
- 40: konisch zulaufender Abschnitt in 39
- 41: Nut in 2

## Patentansprüche

1. Sensoranordnung mit mindestens einem Sensor (7), mit einem aus mindestens einem Kunststoffspritzgussteil (2, 3) aufgebauten Gehäuse (1) und mit im Gehäuse (1) befindlicher Sensorelektronik, mit mindestens einem innerhalb des Gehäuses (1) angeordneten Absorptionskörper (4) zur Aufnahme und zum Binden von Feuchtigkeit, **dadurch gekennzeichnet, dass** der Absorptionskörper (4) ein Kunststoffspritzgussbauteil ist.

2. Sensoranordnung nach Anspruch 1, **dadurch gekennzeichnet, dass** das Gehäuse (1) aus mindestens zwei Gehäuseteilen (2, 3) aus Kunststoffspritzguss aufgebaut ist und der Absorptionskörper (4) mit einem Gehäuseteil im Mehrkomponentenspritzgießverfahren hergestellt ist.

3. Sensoranordnung nach Anspruch 1 oder 2, **dadurch gekennzeichnet, dass** zwei Gehäuseteile (2, 3) mittels eines O-Rings (27) zueinander abgedichtet sind.

4. Sensoranordnung nach einem der vorhergehenden Ansprüche, **dadurch gekennzeichnet, dass** das Gehäuse (1) einen zumindest abschnittsweise rohrförmigen Gehäuseteil (2) und einen diesen an einem Ende abschließenden Deckel (3) aufweist, die unter Eingliederung eines O-Ringes (27) miteinander verbunden sind.

5. Sensoranordnung nach einem der vorhergehenden Ansprüche, **dadurch gekennzeichnet, dass** durch ein Gehäuseteil (3), vorzugsweise durch den Deckel (3) mindestens ein elektrischer Leiter (32) dichtend durchgeführt ist, und dass die Abdichtung zwischen Gehäuseteil (3) und Leiter (32) durch einen O-Ring (36) gebildet ist.

6. Sensoranordnung nach einem der vorhergehenden Ansprüche, **dadurch gekennzeichnet, dass** die Leiterdurchführung im Gehäuseteil (3) durch eine Ausnehmung (39) gebildet ist, die einen nach außen konisch zulaufenden Abschnitt (40) aufweist, in dem der O-Ring (36) zur Anlage kommt, der auf dem die Ausnehmung durchsetzenden Leiter (32), vorzugsweise in einer umlaufenden Nut (35) des Leiters (32) angeordnet ist.

7. Sensoranordnung nach einem der vorhergehenden Ansprüche, **dadurch gekennzeichnet, dass** der mindestens eine dichtend durch das Gehäuseteil (3) geführte Leiter (32) an seiner gehäusefernen Seite elektrisch leitend vorzugsweise durch Löten mit einer Leitung verbunden ist, mit einem elektrisch isolierenden Schrumpfschlauch überzogen und dann mit Kunststoff (38) umspritzt ist.

8. Sensoranordnung nach einem der vorhergehenden Ansprüche, **dadurch gekennzeichnet, dass** der Deckel (3) stopfenförmig ausgebildet ist, mit einem übergreifenden Deckelteil (26) die Stirnseite des rohrförmigen Gehäuseteils (2) abschließt und mit einem abgesetzten Deckelteil (25) in den rohrförmigen Gehäuseteil (8) eingreift, wobei der O-Ring (27) zwischen dem abgesetzten Deckelteil (25) und der Innenseite des rohrförmigen Gehäuseteils (2) angeordnet ist.

9. Sensoranordnung nach einem der vorhergehenden Ansprüche, **dadurch gekennzeichnet, dass** das deckelferne Ende des rohrförmigen Gehäuseteil (2) zu einer Spitze (9) ausgeformt ist, in welcher der Sensor (7) angeordnet ist.

10. Sensoranordnung nach einem der vorhergehenden Ansprüche, **dadurch gekennzeichnet, dass** eine Leiterplatte (5) vorgesehen ist, welche die Sensorelektronik trägt und den rohrförmigen Gehäuseteil (2) längs durchsetzt, an deren einem Ende der Sensor (7) und an deren anderem Ende die durch den Gehäusedeckel geführten Leiter (22) angeordnet sind.

11. Sensoranordnung nach einem der vorhergehenden Ansprüche, **dadurch gekennzeichnet, dass** der Absorptionskörper (4) der Innenkontur des Gehäuses (1) angepasst ist und mittels Abstandshaltern (22) mit Abstand zur Gehäusewand angeordnet ist.

12. Sensoranordnung nach Anspruch 11, **dadurch gekennzeichnet, dass** die Abstandshalter (22) Teil des Absorptionskörpers (4) bilden und vorzugsweise als aus dem Absorptionskörper (4) seitlich auskragende Federzungen (22) ausgebildet sind.

13. Sensoranordnung nach einem der vorhergehenden Ansprüche, **dadurch gekennzeichnet, dass** die Leiterplatte (5) den Absorptionskörper (4) längs durchsetzt und von diesem beabstandet ist.

14. Sensoranordnung nach einem der vorhergehenden Ansprüche, **dadurch gekennzeichnet, dass** Formschlussmittel zwischen dem rohrförmigen Gehäuseteil (2) und dem Absorptionskörper (4) vorgesehen sind, welche deren Anordnung zueinander eindeutig bestimmen und/oder dass Formschlussmittel (31) zwischen dem Gehäusedeckel (3) und dem Absorptionskörper (4) vorgesehen sind, welche deren Anordnung zueinander eindeutig bestimmen.

15. Sensoranordnung nach einem der vorhergehenden Ansprüche, **dadurch gekennzeichnet, dass** der Absorptionskörper (4) den Raum zur Aufnahme des O-Rings (27) zwischen dem rohrförmigen Gehäuseteil (2) und dem Deckel (3) einseitig begrenzt.

16. Sensoranordnung nach einem der vorhergehenden Ansprüche, **dadurch gekennzeichnet, dass** der Absorptionskörper (4) eine in seine zentrale Ausnehmung (21) für die Leiterplatte (5) vorspringende Federzunge (23) aufweist, welche in eine Ausnehmung oder einen Vorsprung (24) an der Leiterplatte (5) eingreift und die Leiterplatte (5) innerhalb des Absorptionskörpers (4) hält.

17. Sensoranordnung nach einem der vorhergehenden Ansprüche, **dadurch gekennzeichnet, dass** das Gehäuse (1) im Bereich des Sensors (7) eine Öffnung (10, 11) aufweist und der Sensor (7) mittels eines O-Rings (20) im Bereich der Öffnung (10, 11) gegenüber dem Gehäuse (1) abgedichtet.

18. Sensoranordnung nach einem der vorhergehenden Ansprüche, **dadurch gekennzeichnet, dass** der Sensor (7) ein Differenzdrucksensor ist, dass im Bereich des Sensors (7) zwei Öffnungen (10, 11) an gegenüberliegenden Seiten des Sensors (7) im Gehäuse (1) vorgesehen sind, wobei jede Öffnung (10, 11) mittels eines O-Rings (20) gegenüber dem Sensor (7) abgedichtet ist.

19. Sensoranordnung nach einem der vorhergehenden Ansprüche, **dadurch gekennzeichnet, dass** alle Abdichtungen des Sensorgehäuses (1) durch O-Ringe (27, 20, 36) gebildet sind.

20. Sensoranordnung nach einem der vorhergehenden Ansprüche, **dadurch gekennzeichnet, dass** der Absorptionskörper (4) aus einem Kunststoff besteht, welcher mindestens 0,5 Masseprozent Wasser und/oder mindestens 0,2 Masseprozent Feuchtigkeit, vorzugsweise mehr als 5 Masseprozent Wasser und/oder mehr als 2 Masseprozent Feuchtigkeit aufnehmen kann.

21. Sensoranordnung nach einem der vorhergehenden Ansprüche, **dadurch gekennzeichnet, dass** der Absorptionskörper (4) aus Polyoxymethylen, Polyethersulfon, Acrylnitril-Butadien-Styrol oder vorzugsweise Polyamid besteht.

## Claims

1. A sensor arrangement with at least one sensor (7), with a housing (1) constructed of at least one plastic injection moulded part (2, 3) and with sensor electronics which are located in the housing (1), with at least one absorption body (4) which is arranged within the housing (1) and which is for receiving and binding moisture, **characterised in that** the absorption body (4) is a plastic injection moulded component.

2. A sensor arrangement according to claim 1, **characterised in that** the housing (1) is constructed of least two housing parts (2, 3) of plastic injection moulding, and the absorption body (4) is manufactured with a housing part with the multi-component injection moulding method.

3. A sensor arrangement according to claim 1 or 2, **characterised in that** two housing parts (2, 3) are sealed to one another by way of an O-ring (27).

4. A sensor arrangement according to one of the preceding claims, **characterised in that** the housing (1) comprises a housing part (2) which is tubular at least in sections and a cover (3) which terminates this housing part at one end, said housing part and cover being connected to one another amid the integration of an O-ring (27).

5. A sensor arrangement according to one of the preceding claims, **characterised in that** at least one electrical lead (32) is sealingly led through a housing part (3), preferably through the cover (3), and that the sealing between the housing part (3) and the lead (32) is formed by an O-ring (36).

6. A sensor arrangement according to one of the preceding claims, **characterised in that** the lead feed-through in the housing part (3) is formed by a recess (39) which has an outwardly conically tapering section (40), in which the O-ring (36) comes to bear, said O-ring being arranged on the lead (32) passing through the recess, preferably in a peripheral groove (35) of the lead (32).

7. A sensor arrangement according to one of the preceding claims, **characterised in that** the at least one lead (32) which is sealingly led through the housing part (3), at its side which is remote from the housing is electrical conductively connected to a lead preferably by way of soldering, is coated with an electrically insulating shrink sleeve and then peripherally injected with plastic (38).

8. A sensor arrangement according to one of the preceding claims, **characterised in that** the cover (3) is designed in a plug-like manner, with an encompassing cover part (26) terminates the face side of the tubular housing part (2) and with a shouldered cover part (25) engages into the tubular housing part (8), wherein the O-ring (27) is arranged between the shouldered cover part (25) and the inner side of the tubular housing part (2).

9. A sensor arrangement according to one of the preceding claims, **characterised in that** the end of the tubular housing part (2) which is remote from the cover is shaped into a tip (9), in which the sensor (7) is arranged.

10. A sensor arrangement according to one of the preceding claims, **characterised in that** a circuit board (5) is provided, which carries the sensor electronics and longitudinally passes through the tubular housing part (2), and at whose one end the sensor (7) is arranged and at whose other end the leads (22) led through the housing cover are arranged.

11. A sensor arrangement according to one of the preceding claims, **characterised in that** the absorption body (4) is adapted to the inner contour of the housing (1) and is arranged at a distance to the housing wall by way of spacers (22).

12. A sensor arrangement according to claims 11, **characterised in that** the spacers (22) form part of the absorption body (4) and preferably are designed as spring tongues (22) laterally projecting out of the absorption body (4).

13. A sensor arrangement according to one of the preceding claims, **characterised in that** the circuit board (5) longitudinally passes through the absorption body (4) and is distanced to this.

14. A sensor arrangement according to one of the preceding claims, **characterised in that** positive-fit means are provided between the tubular housing part (2) and the absorption body (4) and unambiguously determine the arrangement of these to one another and/or that positive-fit means (31) are provided between the housing cover (3) and the absorption body (4) and unambiguously define their arrangement to one another.

15. A sensor arrangement according to one of the preceding claims, **characterised in that** the absorption body (4) at one side delimits the space for receiving the O-ring (27) between the tubular housing part (2) and the cover (3).

16. A sensor arrangement according to one of the preceding claims, **characterised in that** the absorption body (4) comprises a spring tongue (23) which projects into its central recess (21) for the circuit board (5), engages into a recess or a projection (24) on the circuit board (5) and holds the circuit board (5) within the absorption body (4).

17. A sensor arrangement according to one of the preceding claims, **characterised in that** the housing (1) in the region of the sensor (7) comprises an opening (10, 11), and the sensor (7) is sealed with respect to the housing (1) by way of an O-ring (20) in the region of the opening (10, 11).

18. A sensor arrangement according to one of the preceding claims, **characterised in that** the sensor (7) is a differential pressure sensor, that two openings (10, 11) are provided in the housing (1) on opposite sides of the sensor (7), in the region of the sensor (7), wherein each opening (10, 11) is sealed with respect to the sensor (7) by way of an O-ring (20).

19. A sensor arrangement according to one of the preceding claims, **characterised in that** all sealings of the sensor housing (1) are formed by O-rings (27, 20, 36).

20. A sensor arrangement according to one of the preceding claims, **characterised in that** the absorption body (4) consists of a plastic which can absorb at least 0.5 mass percent of water and/or at least 0.2 mass percent of moisture (humidity), preferably more than 5 mass percent of water and/or more than 2 mass percent of moisture (humidity).

21. A sensor arrangement according to one of the preceding claims, **characterised in that** the absorption body (4) consists of polyoxymethylene, polyethersulphone, acrynitril-butadiene-styrene or preferably polyamide.

## Revendications

1. Agencement de capteur avec au moins un capteur (7), avec un boîtier (1) constitué par au moins une pièce en matière synthétique moulée par injection (2, 3) et avec une électronique de capteur située dans le boîtier (1), avec au moins un corps absorbant (4) disposé à l'intérieur du boîtier (1) et destiné à absorber et à lier de l'humidité, **caractérisé en ce que** le corps absorbant (4) est une pièce en matière synthétique moulée par injection.

2. Agencement de capteur selon la revendication 1, **caractérisé en ce que** le boîtier (1) est constitué par au moins deux parties de boîtier (2, 3) en matière synthétique moulée par injection et **en ce que** le corps absorbant (4) est réalisé avec une partie de boîtier selon un procédé de moulage par injection à plusieurs composantes.

3. Agencement de capteur selon la revendication 1 ou 2, **caractérisé en ce que** deux parties de boîtier (2, 3) sont rendues étanches, l'une par rapport à l'autre, par un joint torique (27).

4. Agencement de capteur selon l'une des revendications précédentes, **caractérisé en ce que** le boîtier (1) comprend une partie de boîtier (2) au moins partiellement tubulaire et un couvercle (3) obturant celle-ci à une extrémité, les deux étant reliés l'un à l'autre avec intégration d'un joint torique (27).

5. Agencement de capteur selon l'une des revendications précédentes, **caractérisé en ce qu'**au moins un conducteur électrique (32) est passé de manière étanche par une partie de boîtier (3), de préférence par le couvercle (3), et **en ce que** l'étanchéité entre la partie de boîtier (3) et le conducteur (32) est formée par un joint torique (36).

6. Agencement de capteur selon l'une des revendications précédentes, **caractérisé en ce que** le passage de conducteur dans la partie de boîtier (3) est formé par un évidement (39) comportant une partie (40) se rétrécissant de manière conique vers l'extérieur et dans laquelle est en appui le joint torique (36) qui est disposé sur le conducteur (32) traversant l'évidement, de préférence dans une rainure périphérique (35) du conducteur (32).

7. Agencement de capteur selon l'une des revendications précédentes, **caractérisé en ce que** ledit au moins un conducteur (32) passé de manière étanche par la partie de boîtier (3), est relié à son extrémité opposée au boîtier, de manière électriquement conductrice, de préférence par soudage, à un câble, est revêtu d'une gaine thermorétractable électriquement isolante et ensuite surmoulé avec de la matière synthétique (38).

8. Agencement de capteur selon l'une des revendications précédentes, **caractérisé en ce que** le couvercle (3) présente la forme d'un bouchon, qu'il ferme la face d'extrémité de la partie de boîtier (2) tubulaire par une partie surplombante (26) du couvercle et qu'il s'engage dans la partie de boîtier (2) tubulaire par une partie de couvercle (25) décalée, le joint torique (27) étant disposé entre la partie de couvercle (25) décalée et la paroi intérieure de la partie de boîtier (2) tubulaire.

9. Agencement de capteur selon l'une des revendications précédente, **caractérisé en ce que** l'extrémité opposée au couvercle, de la partie de boîtier (2) tubulaire présente la forme d'une pointe (9) dans laquelle le capteur (7) est disposée.

10. Agencement de capteur selon l'une des revendications précédentes, **caractérisé en ce qu'**il est prévu une carte de circuit imprimé (5) qui porte l'électronique de capteur et traverse la partie de boîtier (2) tubulaire dans le sens longitudinal, à une extrémité de laquelle est situé le capteur (7) et à l'autre extrémité de laquelle sont situés les conducteurs (32) passés par le couvercle du boîtier.

11. Agencement de capteur selon l'une des revendications précédentes, **caractérisé en ce que** le corps absorbant (4) est adapté aux contours intérieurs du boîtier (1) et est disposé, à l'aide d'entretoises 22), à une distance de la paroi de boîtier.

12. Agencement de capteur selon la revendication 11, **caractérisé en ce que** les entretoises (22) forment une partie du corps absorbant (4) et sont formées, de préférence, comme des languettes résilientes (22) latéralement en saillie.

13. Agencement de capteur selon l'une des revendications précédentes, **caractérisé en ce que** la carte de circuit imprimé (5) traverse le corps absorbant (4) dans le sens longitudinal et est espacé de celui-ci.

14. Agencement de capteur selon l'une des revendications précédentes, **caractérisé en ce qu'**il est prévu des moyens de complémentarité de forme entre la partie de boîtier (2) tubulaire et le corps absorbant (4), qui déterminent, de manière univoque, la disposition de l'un par rapport à l'autre et/ou **en ce qu'**il est prévu des moyens de complémentarité de forme (31) entre le couvercle de boîtier (3) et le corps absorbant (4), qui déterminent, de manière univoque, la disposition de l'un par rapport à l'autre.

15. Agencement de capteur selon l'une des revendications précédentes, **caractérisé en ce que** le corps absorbant (4) délimite sur un côté l'espace pour loger le joint torique (27) entre la partie de boîtier (2) tubulaire et le couvercle (3).

16. Agencement de capteur selon l'une des revendications précédentes, **caractérisé en ce que** le corps absorbant (4) comprend une languette résiliente (23) en saillie jusque dans son évidement central (21) pour la carte de circuit imprimé (5), qui s'engage dans un évidement ou dans une saillie (24) sur la carte de circuit imprimé (5) et maintient la carte de circuit imprimé (5) à l'intérieur du corps absorbant (4).

17. Agencement de capteur selon l'une des revendications précédentes, **caractérisé en ce que** le boitier (1) comprend, dans la zone du capteur (7), une ouverture (10, 11) et **en ce que**, à l'aide d'un joint torique (20), dans la zone de l'ouverture (10, 11), le capteur (7) est rendu étanche par rapport au boîtier (1).

18. Agencement de capteur selon l'une des revendications précédentes, **caractérisé en ce que** le capteur (7) et un capteur de pression différentielle, **en ce qu'**il est prévu, dans la zone du capteur (7), dans le boîtier (1), deux ouvertures (10, 11) de part et d'autre du capteur (7), chaque ouverture (10, 11) étant rendue étanche par rapport au capteur (7), par un joint torique (20).

19. Agencement de capteur selon l'une des revendications précédentes, **caractérisé en ce que** toutes les étanchéités du boîtier de capteur (1) sont constituées par des joints toriques (27, 20, 36).

20. Agencement de capteur selon l'une des revendications précédentes, **caractérisé en ce que** le corps absorbant (4) consiste en une matière synthétique qui peut absorber au moins 0,5 % en masse d'eau et/ou au moins 0,2 % en masse d'humidité, de préférence plus que 5 % en masse d'eau et/ou plus que 2 % en masse d'humidité.

21. Agencement de capteur selon l'une des revendications précédentes, **caractérisé en ce que** le corps absorbant (4) consiste en polyoxyméthylène, polyéthersulfone, acrylonitrile-butadiène-styrène ou, de préférence, polyamide.
